**Europäisches Patentamt**

**European Patent Office**

**Office européen des brevets**

(19)

(11) Numéro de publication : **0 321 344 B1**

# FASCICULE DE BREVET EUROPEEN

(12)

(45) Date de publication du fascicule du brevet :
**29.05.91 Bulletin 91/22**

(51) Int. Cl.⁵ : **F01D 25/24,** F01D 5/06,
F16B 41/00

(21) Numéro de dépôt : **88403191.5**

(22) Date de dépôt : **15.12.88**

(54) Dispositif cache-boulons pour turbomachine.

(30) Priorité : **16.12.87 FR 8717547**

(43) Date de publication de la demande :
**21.06.89 Bulletin 89/25**

(45) Mention de la délivrance du brevet :
**29.05.91 Bulletin 91/22**

(84) Etats contractants désignés :
**DE FR GB**

(56) Documents cités :
**FR-A- 483 555**
**GB-A- 2 057 617**
**US-A- 3 727 660**
**US-A- 4 190 397**

(73) Titulaire : **SOCIETE NATIONALE D'ETUDE ET
DE CONSTRUCTION DE MOTEURS
D'AVIATION, "S.N.E.C.M.A."
2, Boulevard du Général Martial Valin
F-75015 Paris (FR)**

(72) Inventeur : **Touze, Eric
81, Square Marie Curie
F-77350 Le Mee sur Seine (FR)**

(74) Mandataire : **Moinat, François et al
S.N.E.C.M.A. Service des Brevets Boîte
Postale 81
F-91003 Evry Cédex (FR)**

## Description

La présente invention concerne un dispositif de fixation à vis sur une bride annulaire de turbomachine, les têtes de vis étant recouvertes d'un carénage annulaire ou cache-boulons.

Lorsque des vis sont utilisées pour la fixation d'un élément sur une bride annulaire, notamment dans des applications aux turbomachines, il s'avère nécessaire pour éviter des perturbations néfastes dans les écoulements aérodynamiques d'air ou de gaz, lorsque les têtes de vis sont placées dans l'écoulement, de les recouvrir d'un tel carénage annulaire ou cache-boulons.

US-A 3 727 660 décrit ainsi un exemple d'application à un compresseur dans lequel un cache-boulons est utilisé, aménagé en outre de manière à assurer la rétention des éléments en cas de dévissage accidentel ou perte d'un élément pour une raison quelconque et à éviter ainsi qu'un tel élément entraîné dans la veine de circulation des gaz ne cause des dommages qui peuvent être importants. La solution proposée, malgré ses avantages, impose cependant un blocage global de tous les boulons, ce qui dans certaines applications peut présenter des inconvénients pour les opérations de montage-démontage notamment lors des opérations de maintenance ne nécessitant d'intervention que sur une seule vis par exemple.

La solution mise en oeuvre par l'invention résoud de manière plus satisfaisante les différents problèmes posés sans présenter les inconvénients des solutions connues antérieures. Selon l'invention, un dispositif de fixation à vis utilisant un cache-boulons annulaire est caractérisé en ce que ledit cache-boulons porte, à l'intérieur et respectivement au droit de chaque vis, une pluralité de premières douilles cylindriques, de diamètre supérieur à celui des têtes de vis ayant une extrémité solidaire au niveau respectif de trous d'accès auxdites vis, de la face du cache-boulons opposée auxdites vis et comportant chacune à leur deuxième extrémité quatre découpes en créneau qui coopèrent avec deux premières pattes formées à l'extrémité d'une deuxième douille cylindrique disposée à l'intérieur de chaque première douille et comportant deux deuxièmes pattes courbées vers l'intérieur et coopérant avec la tête de vis de manière à bloquer ladite vis en rotation.

Avantageusement, lesdites deuxièmes pattes découpées sur le flanc cylindrique d'une deuxième douille, repliées à angle droit et légèrement déformées vers l'intérieur par rapport audit flanc de douille comportent chacune sur son bord interne une découpe en demi-cercle légèrement désaxée. En outre, chaque deuxième douille cylindrique comporte sur son bord externe un couvercle dans lequel est ménagé un trou oblong de manière à permettre le retrait, au moyen d'un outil, de ladite deuxième douille.

D'autres caractéristiques et avantages de l'invention seront mieux compris à la lecture de la description qui va suivre d'un mode de réalisation de l'invention, en référence aux dessins annexés sur lesquels :

– la figure 1 représente une vue schématique générale d'une turbomachine sur laquelle est utilisé le dispositif de fixation à vis associées à un cache-boulons, conforme à l'invention et représenté par un arraché vu en coupe longitudinale par un plan passant par l'axe de rotation de la turbomachine,

– la figure 2 montre un détail agrandi de la partie arrachée selon I de la figure 1, vue en coupe longitudinale par un plan passant par l'axe de rotation de la turbomachine.

– la figure 3 montre suivant un détail agrandi de la figure 2, le dispositif de fixation représenté aux figures 1 et 2.

– la figure 4 représente une vue, en coupe selon la ligne IV-IV de la figure 3 du dispositif de fixation représenté à la figure 3,

– la figure 5 représente une vue en bout suivant la flèche V du dispositif de fixation représenté à la figure 3 avec des parties enlevées,

– la figure 6 représente une vue, en coupe selon la ligne VI-VI de la figure 3, du dispositif de fixation représenté aux figures 3 à 5.

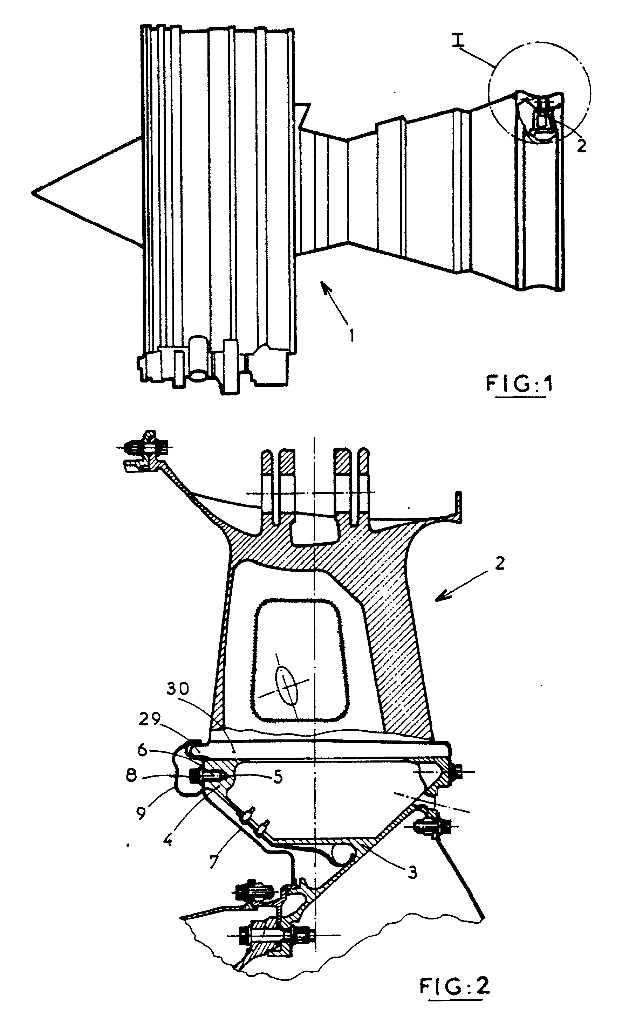

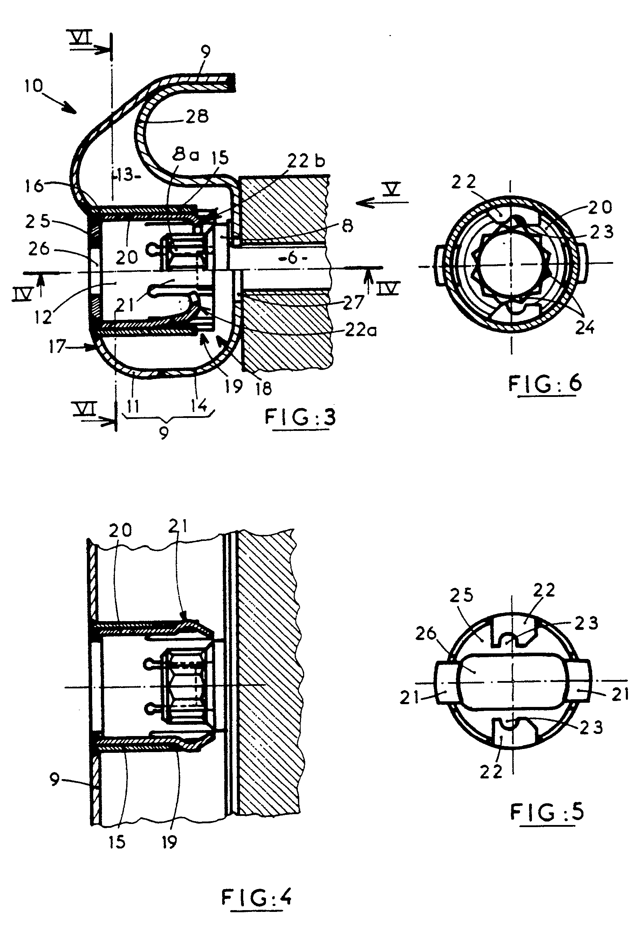

La turbomachine 1 représentée schématiquement à la figure 1 comporte en sortie de turbine un carter d'échappement 2 sur lequel côté aval est fixé le canal d'éjection (non représenté aux dessins). Comme représenté plus en détail à la figure 2, le carter d'échappement 2 comporte un moyeu 3 portant côté amont une bride annulaire 4 munie de trous taraudés 5 de fixation, régulièrement répartis. Ces trous 5 reçoivent des vis 6 destinées notamment, dans l'exemple d'application représenté aux dessins, à la fixation sur ladite bride 4 d'un couvercle de ventilation 7. Les têtes 8 des vis 6 sont recouvertes d'un carénage annulaire dont la forme obtenue à partir de tôle est adaptée pour assurer un écoulement des gaz dans de bonnes conditions aérodynamiques et qui constitue un cache-boulons 9. Le dispositif de fixation 10 conforme à l'invention et constitué du cache-boulons 9 et des vis 6 est représenté plus en détails aux figures 3 à 6. Au droit de chaque vis 6, le cache-boulons 9 comporte sur sa face externe 11 de carénage des trous 12 d'accès. Dans l'espace annulaire interne 13 du cache-boulons 9 ménagé entre sa face externe 11 et sa face interne 14 et où sont logées lesdites têtes 8 des vis 6, sont disposées des premières douilles cylindriques 15, ayant une première extrémité 16 solidaire de ladite face externe 11, cette première extrémité 16 étant, par exemple, dans l'exemple représenté aux figures 3 à 6, soudée sur le bord circulaire 17 desdits trous 12 d'accès. Les deux parties 11 et 14 du cache-boulons 9 peuvent par exemple être également soudées l'une à l'autre pour faciliter la fabrication. La deuxième extrémité 18 desdites premières douilles 15 comporte quatre découpes 19 en créneau.

A l'intérieur de chaque première douille 15 est placée une deuxième douille cylindrique 20 dont l'extrémité interne est découpée pour former, d'une part, deux premières pattes 21 qui, comme cela est visible sur les figures 3 et 4, sont légèrement déformées vers l'extérieur de manière à s'encastrer dans lesdites découpes 19 de première douille 15 et, d'autre part, deux deuxièmes pattes 22 dont l'une 22a est représentée à la demi-vue inférieure de la figure 3, en position libre, repliée à angle droit vers l'intérieur de la deuxième douille 20 et légèrement déformée vers l'intérieur et l'autre 22b est représentée à la demi-vue supérieure de la figure 3, engagée sur l'extrémité 8a de la tête 8 de la vis 6. Le bord interne de chaque deuxième patte 22 comporte, comme visible sur les figures 5 et 6, une découpe 23 en demi-cercle qui est légèrement désaxée. Une des dents 24 de la denture externe disposée sur la tête 8 de vis 6 est engagée dans ladite découpe 23 de l'une des deuxièmes pattes 22 de la deuxième douille 20. L'extrémité externe de la deuxième douille 20 porte un couvercle 25 dans lequel est ménagé un trou oblong 26.

Le mode de montage de l'ensemble qui vient d'être décrit est le suivant. Le cache-boulons 9 à douilles internes 15 étant positionné sur les pièces à assembler, couvercle de ventilation 7 et bride annulaire 4 du carter d'échappement 2, les vis 6 sont montées et serrées dans les trous taraudés 5 de ladite bride passant par les trous d'accès 12 ainsi qu'à travers des trous de fixation 27 percés dans la partie interne 14 du cache-boulons 9 et les têtes 8 des vis 6 venant en appui sur les bords de ces trous 27. Les deuxièmes douilles 20 sont alors introduites vers l'intérieur du cache-boulons 9 par les trous d'accès 12 de manière à encliqueter les premières pattes 21 dans les découpes 19 des premières douilles 15 et à engager les découpes 23 des deuxièmes pattes 22 sur les dents 24 de l'extrémité 8a de la tête 8 des vis 6. Dans le mode de réalisation représenté aux dessins à titre d'exemple, les dents 24 sont au nombre de 12 et les découpes 23 coopérantes sont désaxées d'un vingt-quatrième de tour de manière à obtenir un engagement à coup sûr de la dent 24 dans la découpe 23.

Il résulte des dispositions décrites que la vis 6 est bloquée en rotation par l'immobilisation des dents 24 de la tête 8 de vis par les deuxièmes pattes 22 de la deuxième douille 20, elle-même bloquée par les premières pattes 21 par rapport à la première douille 15 solidaire d'un ensemble fixe. Tout desserrage accidentel est ainsi évité. Dans le cas extrême où une rupture ou détérioration des pattes 21 permettrait le desserrage d'une vis 6, la deuxième douille 20 reste accrochée à la tête de vis 6 par l'intermédiaire des pattes 22.

L'ensemble obtenu conserve également sa démontabilité et une intervention est rendue possible unitairement sur les vis 6. En effet il suffit d'engager un outil quart de tour adapté dans le trou oblong 26 du couvercle 25 de la deuxième douille 20 et de tirer sur ladite douille 20 pour désengager à la fois les premières pattes 21 des découpes 19 de la première douille 15 et les deuxièmes pattes 22 des dents 24 de la tête 8 de vis. Les risques d'usure prématurée à la suite de plusieurs montages/démontages sont réduits du fait que seule une déformation élastique des pattes de la deuxième douille 20 intervient pour assurer le verrouillage de l'ensemble du dispositif de fixation.

Dans le mode de réalisation et l'application décrits et représentés aux dessins, le cache-boulons 9 comporte en outre du côté aval une gorge annulaire 28 où se placent les bords amont 29 de tuiles 30 de protection thermique du moyeu 3 du carter d'échappement 2 de la turbomachine.

## Revendications

1. Dispositif de fixation d'une pièce de révolution sur une bride annulaire de turbomachine, constitué de vis (6) régulièrement réparties dont les têtes (8) sont recouvertes d'un carénage annulaire formant un cache-boulons (9) caractérisé en ce que ledit cache-boulons (9) porte à l'intérieur et respectivement au droit de chaque vis (6), une pluralité de premières douilles cylindriques (15), de diamètre supérieur à celui de l'extrémité (8a) des têtes de vis, ayant une première extrémité (16) solidaire, au niveau respectif de trous d'accès (12) auxdites vis (6), de la face (11) du cache-boulons (9) opposée auxdites vis (6), et comportant chacune à leur deuxième extrémité (18) quatre découpes (19) en créneau qui coopèrent avec deux premières pattes (21) formées à l'extrémité d'une deuxième douille (20) cylindrique disposée à l'intérieur de chaque première douille (15) et comportant deux deuxièmes pattes (22) courbées vers l'intérieur et coopérant avec l'extrémité (8a) de la tête de vis de manière à bloquer ladite vis (6) en rotation.

2. Dispositif de fixation à vis associées à un cache-boulons selon la revendication 1 dans lequel le cache-boulons (9) est constitué de deux parties soudées (11, 14) et lesdites premières douilles cylindriques (15) ont leur base soudée au bord (17) desdits trous d'accès (12) de la face (11) du cache-boulons.

3. Dispositif de fixation à vis associées à un cache-boulons selon l'une des revendications 1 ou 2 dans lequel lesdites deuxièmes pattes (22) découpées sur le flanc cylindrique d'une deuxième douille (20), repliées à angle droit vers l'intérieur et légèrement déformées vers l'intérieur par rapport audit flanc de douille (20) comportent chacune sur son bord interne une découpe (23) en demi-cercle légèrement

*désaxée.*

4. Dispositif de fixation à vis associées à un cache-boulons selon l'une quelconque des revendications 1 à 3 dans lequel chaque deuxième douille cylindrique (20) comporte sur son bord externe un couvercle (25) dans lequel est ménagé un trou oblong (26) de manière à permettre le retrait, au moyen d'un outil, de ladite deuxième douille (20).

5. Dispositif de fixation à vis associées à un cache-boulons selon l'une quelconque des revendications 1 à 4 dans lequel ladite pièce de révolution est constituée par un couvercle de ventilation (7) fixé sur la bride annulaire (4) amont du moyeu (3) d'un carter d'échappement (2) de turbomachine et sur la face aval dudit cache-boulons est ménagée une gorge annulaire (28) supportant le bord amont (29) de tuiles (30) de protection thermique dudit moyeu.

## Ansprüche

1. Vorrichtung zur Befestigung eines Drehteils an einem ringförmigen Flansch einer Turbomaschine, bestehend aus in regelmäßiger Verteilung angeordneten Schrauben (6), deren Köpfe von einer eine Schraubensicherung (9) bildenden ringförmigen Verkleidung abgedeckt sind, **dadurch gekennzeichnet,** daß die Schraubensicherung (9) innen an der Stelle der einzelnen Schrauben (6) mehrere erste zylindrische Hülsen (15) trägt, deren Durchmesser größer ist als derjenige des Endbereichs (8a) der Schraubenköpfe und deren erster Endbereich (16) jeweils auf dem Niveau von Zugangslöchern (12) für die Schrauben (6) mit der den Schrauben (6) entgegengesetzten Seite (11) der Schraubensicherung (9) fest verbunden ist, und daß jede dieser Hülsen (15) an ihrem zweiten Endbereich (18) vier zinnenförmige Ausschnitte (19) aufweist, die mit zwei ersten, an dem Endbereich einer zweiten zylindrischen Hülse (20) ausgebildeten ersten Lappen (21) zusammenwirken, wobei diese zweiten Hülsen im Innern der ersten Hülsen (15) angeordnet sind und zwei nach innen gebogene zweite Lappen (22) aufweisen, die mit dem Endbereich (8a) des Schraubenkopfes derart zusammenwirken, daß sie die Schraube (6) gegen Drehung sichern.

2. Befestigungsvorrichtung mit einer Schraubensicherung zugeordneten Schrauben nach Anspruch 1, in der die Schraubensicherung (9) aus zwei miteinander verschweißten Teilen (11, 14) besteht und die genannten ersten zylindrischen Hülsen (15) an ihrer Basis mit dem Rand (17) der Zugangslöcher (12) der genannten Seite (11) der Schraubensicherung verschweißt sind.

3. Befestigungsvorrichtung mit einer Schraubensicherung zugeordneten Schrauben nach Anspruch 1 oder 2, in der die an der zylindrischen Flanke einer der zweiten Hülsen (20) ausgeschnittenen zweiten Lappen (22), die rechtwinklig nach innen abgewinkelt und gegenüber der Flanke der Hülse (20) leicht nach innen verformt sind, jeweils an ihrem Innenrand einen leicht außerachsig angeordneten halbkreisförmigen Ausschnitt (23) besitzen.

4. Befestigungsvorrichtung mit einer Schraubensicherung zugeordneten Schrauben nach einem der Ansprüche 1 bis 3, in der jede der zweiten zylindrischen Hülsen (20) an ihrem Außenrand einen Deckel (25) aufweist, in dem ein Langloch (26) so angebracht ist, daß es das Zurückziehen der zweiten Hülse (20) mit Hilfe eines Werkzeugs ermöglicht.

5. Befestigungsvorrichtung mit einer Schraubensicherung zugeordneten Schrauben nach einem der Ansprüche 1 bis 4, in der das genannte Drehteil aus einer auf dem ringförmigen Flansch (4) stromaufwärts der Nabe (3) eines Turbomaschinen-Auslaßgehäuses (2) befestigten Lüftungsabdeckung (7) besteht und auf der stromabwärtigen Seite der Schraubensicherung eine ringförmige Kehle (28) angebracht ist, die den stromaufwärtigen Rand (29) von Platten (30) für den Wärmeschutz der Nabe abstützt.

## Claims

1. Device for fixing a body of revolution onto an annular flange of a turboshaft engine, consisting of uniformly distributed screw bolts (6) of which the heads (8) are covered by an annular shroud forming a bolt head cover (9) characterised in that the said bolt head cover (9) carries within it and respectively in the area of each screw bolt (6), a plurality of first cylindrical bushes (15), of a diameter greater than that of the end portion (8a) of the bolt heads, having a first end (16) firmly attached to the face (11) of the bolt head cover (9) at the respective points of access holes (12) to the said screw bolts (6), and each comprising at their second end (18) four crenellated cut-outs (19) engaging with two first tongues (21) formed at the end of a second cylindrical bush (20) placed inside each first bush (15) and comprising two second tongues (22) incurved towards the inside of the bush and engaging with the end portion (8a) of the head of the screw bolt so as to block rotation of the said screw bolt (6).

2. Fixing device using screw bolts associated with a bolt head cover in accordance with Claim 1 in which the bolt head cover (9) is made up of two welded parts (11, 14) and the said first cylindrical bushes (15) have their base welded to the rim (17) of the said access holes (12) in the face of the bolt head cover.

3. Fixing device using screw bolts associated with a bolt head cover in accordance with either of Claims 1 or 2 in which the said second tongues (22) cut out on the cylindrical sides of a second bush (20) bent at right angles towards the inside and slightly deformed towards the inside relative to the said side of the bush (20) each comprises on its inner edge a semicircular cut-out which is slightly off centre axially.

4. Fixing device using screw bolts associated with a bolt head cover in accordance with any of Claims 1 to 3 in which each second cylindrical bush (20) comprises at its outer rim a cover (25) in which is formed an oblong hole (26) so as to allow the withdrawal of the said second bush (20) by means of a tool.

5. Fixing device using screw bolts associated with a bolt head cover in accordance with any of Claims 1 to 4 in which the said body of revolution is constituted by a ventilation cover (7) fixed to the upstream annular flange (4) of the hub (3) of an exhaust duct (2) of a turboshaft engine and on the downstream face of the said bolt head cover is formed an annular throat (28) supporting the upstream edge (29) of thermal protection tiles (30) for the said hub.

FIG:1

FIG:2

FIG:3

FIG:6

FIG:4

FIG:5